Europäisches Patentamt

European Patent Office

Office européen des brevets

(19)

(11) **EP 0 910 023 A2**

(12) **EUROPÄISCHE PATENTANMELDUNG**

(43) Veröffentlichungstag:
21.04.1999 Patentblatt 1999/16

(51) Int. Cl.$^6$: **G06F 15/80**

(21) Anmeldenummer: 98117688.6

(22) Anmeldetag: 17.09.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.10.1997 DE 19746042**

(71) Anmelder:
**SIEMENS AKTIENGESELLSCHAFT**
**80333 München (DE)**

(72) Erfinder:
• **Tresp, Volker**
**80539 München (DE)**
• **Briegel, Thomas**
**81667 München (DE)**

(54) **Verfahren und Anordnung zur neuronalen Modellierung eines dynamischen Systems mit nichtlinearem stochastischem Verhalten**

(57) Die Erfindung gibt eine Lösung zur Modellierung stochastischer nicht linearer dynamischer Systeme an, bei denen wenige Meßwerte der Einflußgröße vorliegen und die restlichen Werte der Zeitreihe modelliert werden müssen. Als Lösung wird eine spezifische Kombination eines nichtlinearen rekurrenten neuronalen prädiktiven Netzwerkes und eines linearen Fehlermodells vorgeschlagen, womit eine Vorhersage durchgeführt werden kann und die Anwendung von maximum likelihood Adaptionsregeln durchgeführt werden kann. Im Speziellen kann dazu das rekurrente neuronale Netzwerk mit Hilfe der Echtzeitrekurrenten Lernregel trainiert werden und das lineare Fehlermodell wird mit Hilfe der Fehlermodelladaptionsregel trainiert, die auf Basis der vorwärts-rückwärts Kalman-Filter-Gleichungen implementiert ist. Dieses Modell wird eingesetzt, um Werte des Glukose-Insulin-Metabolismus eines Diabetespatienten vorherzusagen. Die Anordnung realisiert die Kombination dieser beiden Modelle.

FIG 3

EP 0 910 023 A2

Printed by Xerox (UK) Business Services
2.16.7/3.6

**Beschreibung**

Die Erfindung bezieht sich auf ein Verfahren und auf eine Anordnung zur Modellierung eines Systems mit nicht linearem stochastischem Verhalten, insbesondere eines biologischen Systems, wie beispielsweise dem Insulin-Glukose-Metabolismus, für den, wie auch für andere Systeme, wenig Lerndaten zum Training des neuronalen Netzes zur Verfügung stehen.

Weil Messungen von Einflußgrößen, zur Zustandsbestimmung eines technischen oder physiologischen Systems, teilweise sehr aufwendig und umständlich durchzuführen sind, werden sie häufig nur in unregelmäßigen Zeitintervallen vorgenommen. Diabetiker bestimmen ihren Blutzuckergehalt beispielsweise lediglich 4-5 mal am Tag. Falls man versucht Modelle von derartigen Systemen zu erstellen, so kommt erschwerend hinzu, daß diese sich in hohem Maße nichtlinear und stochastisch verhalten, so daß neuronale Netze für ihre Modellierung geeignet erscheinen. In üblicher Weise werden solche Netze im „Free-Running"-Betrieb, auch als Freilaufmodus bezeichnet, eingesetzt, in dem Netzwerkvorhersagen iteriert werden, oder im "Teacher-Forcing Mode", in dem aktuelle Messungen der Zeitreihe, die dem Netz zur Verfügung gestellt wird, die iterierten Werte ersetzen. Beide Ansätze sind problematisch bei solchen Systemen, die sich in hohem Maße stochastisch verhalten und bei denen für die einzelnen Einflußgrößen nur wenig Meßwerte in der Zeitreihe zur Verfügung stehen. Aus dem Stand der Technik [2] ist es bekannt solche Probleme mit Hilfe von stochastischen Modellen anzugehen, in dem man beispielsweise nichtlineare Zustandsraummodelle verwendet. Dabei besteht jedoch das Problem der Vorhersage und des Trainings von fehlenden Meßwerten, dessen analytische Lösung zu derartig komplizierten Integralen führt, daß sie unbehandelbar sind. Alternativ dazu können für die Vorhersage und das Training zustandsabhängige Linearisierungen durchgeführt werden, von denen die populärste der „Extended Kalman Filter" ist. Weitere Lösungsmöglichkeiten für derartige Probleme sind aus dem Stand der Technik nicht bekannt.

Die der Erfindung zu Grunde liegende Aufgabe besteht darin, ein Verfahren und eine Anordnung anzugeben, um von Systemen, die sich nichtlinear und stochastisch verhalten und von deren Einflußgrößen wenig Meßwerte zum Training des neuronalen Netzes zur Verfügung stehen, ein gültiges Modell zu erhalten.

Diese Aufgabe wird für das Verfahren gemäß den Merkmalen des Patentanspruches 1 und für die Anordnung gemessen Merkmalen des Patentanspruches 10 gelöst. Weiterbildungen der Erfindung ergeben sich aus den abhängigen Ansprüchen.

Ein Vorteil des erfindungsgemäßen Verfahrens und der erfindungsgemäßen Anordnung besteht darin, daß man durch die Kombination eines linearen Fehlermodells mit einem rekurrenten neuronalen Netz, für Ein- oder Mehrschrittvorhersage einfache Iterationsregeln erhält, mit denen das lineare Fehlermodell verbessert werden kann. Ein weiterer Vorteil besteht darin, daß für das "maximum likelihood learning" das rekurrente neuronale Netz mit Hilfe von „Real Time recurrent learning", auch Echtzeit-Lernregel für rekurrente neurronale Netze genannt, trainiert werden kann und daß das lineare Fehlermodell mit Hilfe einer Adaptionsregel trainiert werden kann, die sich der vorwärts-, rückwärts-Kalman-Filter-Gleichungen bedient.

Vorteilhaft werden bei einer Weiterbildung des Verfahrens die angegebenen Systemgleichungen verwendet, da damit ein möglichst geringer Rechenaufwand beim Training und bei der Simulation des Modells verbunden ist.

Vorteilhaft kann bei einer Weiterbildung des Verfahrens das dynamische System des Glukose-Insulin-Metabolismus eines Diabetespatienten modelliert werden, wobei bevorzugt als Einflußgröße der Glukosespiegel des Patienten durch das neuronale Netz und das Fehlermodell modelliert wird, da für diesen Meßwert als Einflußgröße wenig Werte zur Verfügung stehen und sich das gesamte System in hohem Maße stochastisch und nichtlinear verhält.

Vorteilhaft werden bei einer Weiterbildung des Verfahrens für das Training des Modells Zeitreihen von verabreichten Insulindosen, der Essensmenge, körperlicher Ertüchtigung und dem aktuellen, sowie dem vorangegangenen geschätzten Blutzuckerwert zur Verfügung gestellt, da dieses die Einflußgrößen sind, die sich am meisten auf den Blutzuckerspiegel auswirken.

Vorteilhaft weist eine Anordnung zur neuronalen Modellierung eines dynamischen Systems mit nichtlinearem stochastischem Verhalten ein rekurrentes Netz, sowie Mittel zur Fehlermodellierung des Systemfehlers des dynamischen Systems auf, wobei das neuronale Netz mit Hilfe der Differenz aus dem Systemfehler und einem Meßwert, der zum jeweiligen Zeitpunkt der Zeitreihe gemessen wurde, trainiert wird. Auf diese Weise wird sichergestellt, daß das neuronale Netz alle Nichtlinearitäten des Systems lernt.

Vorteilhaft wird in einer Weiterbildung der Anordnung das neuronale Netz als multi-layer perceptron ausgeführt, da sich derartige neuronale Netze besonders gut zur Modellierung von unvollständigen Zeitreihen eignen.

Vorteilhaft wird eine Weiterbildung der Anordnung zur Vorhersage des Blutzuckerwertes eines Diabetespatienten eingesetzt, indem der aktuelle Blutzuckerwert zur Verfügung gestellt wird, da sich mit einer solchen Anordnung derzeit die besten Vorhersageergebnisse erzielen lassen.

Im Folgenden werden Ausführungsbeispiele der Erfindung anhand von Figuren weiter erläutert.

Figur 1     zeigt eine Zeitreihe und den Vorhersagewert in Abhängigkeit verschiedener Iterationsverfahren des neuronalen Netzes.

Figur 2 zeigt die selbe Zeitreihe mit Vorhersagewerten unter Verwendung eines richtigen Fehlermodelles.
Figur 3 zeigt ein Beispiel einer erfindungsgemäßen Anordnung.
Figur 4 zeigt Blutzuckerkurven für verschiedene Modellierungsmethoden.
Figur 5 zeigt die Standardabweichung für eine erfindungsgemäß modellierte Blutzuckerkurve.

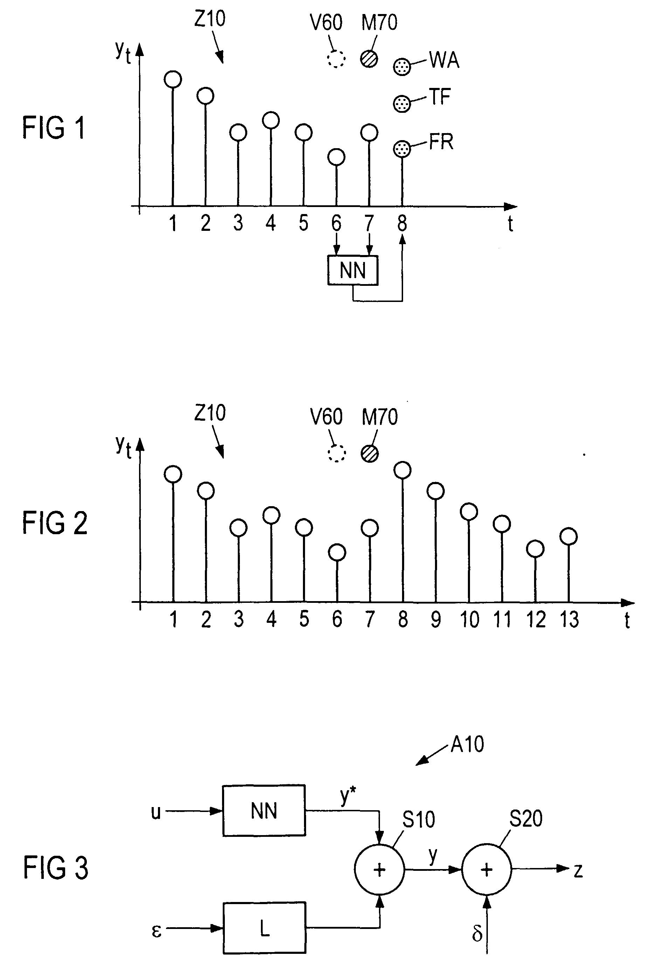

Wie Figur 1 zeigt, besteht eine Zeitreihe Z10 für solche Zeitpunkte an denen keine Meßwerte von Einflußgrößen zur Verfügung stehen, wie hier für t=1 bis t=6 aus iterierten Werten, die hier als unausgefüllte Kreise dargestellt sind. Für den Fall daß das Netzwerk in einem Freilaufmodus betrieben wird, würde es den Meßwert zum Zeitpunkt t=7 M70 ignorieren und als Vorhersagewert FR zum Zeitpunkt 8 ausgeben. Wie erkannt werden kann, werden dem neuronalen Netz NN hier die Werte der Zeitreihe zum Zeitpunkt 6 und 7 zur Vorhersage des 8-ten Wertes zur Verfügung gestellt. Für den Fall, daß das neuronale Netz im sogenannten "Teacher-Forcing-Mode" betrieben wird, würde der gemessene Wert M70 für den iterierten Wert zum Zeitpunkt 7 eingesetzt werden. Dies ist nicht die optimale Vorgehensweise, da durch das Wissen über den Meßwert zum Zeitpunkt 7 auch Informationen für die Zeitreihe zum Zeitpunkt 6 zur Verfügung stehen. In diesem Fall ist in der Zeitreihe der Wert V60 geeigneter, als der iterierte Wert.

Wie Figur 2 zeigt, sieht ein vernünftiger Werteverlauf der diesen Sachverhalt berücksichtigt für die Werte 8-13 so aus, daß die Vorhersagen nach dem Meßwert im Nahbereich dieses Meßwertes zu finden sind. Dieses Vorhersageverhalten des Modells kann durch Verwendung eines geeigneten Fehlermodells erreicht werden. Dem Systemmodell des dynamischen Systems liegt dabei die Systemgleichung der Form

$$y_t = f_w(y_{t-1},...,y_{t-N},u_t)$$

zu Grunde. Diese ist von der Ordnung N, mit einer Eingangsgröße $u_t$ wobei $f_w(.)$ ein neuronales Netzwerkmodell darstellt, daß den Parametervektor w aufweist. Gemäß dem Verfahren wird ein Modell mit Zustandsaktualisierungen gemäß folgender Gleichungen vorgeschlagen:

$$y_t^* = f_w(y_{t-1}^*,...,y_{t-N}^*,u_t) \tag{1}$$

$$x_t = \sum_{i=1}^{K} \theta_i x_{t-i} + \varepsilon_t \tag{2}$$

$$y_t = y_t^* + x_t = f_w(y_{t-1}^*,...,y_{t-N}^*,u_t) + \sum_{i=1}^{K} \theta_i x_{t-i} + \varepsilon_t , \tag{3}$$

wobei die Meßwertgleichung

$$z_t = y_t + \delta_t \tag{4}$$

lautet. Dabei bedeuten $\varepsilon_t$ und $\delta_t$ additives Rauschen. Hierbei wird die Einflußgröße $y_t$ nun durch die Summe der deterministischen Antwort des rekurrenten neuronalen Netzwerkes $y_t^*$ mit dem von einem linearen Systemfehlermodell abgegebenen Systemfehler $x_t$ gebildet. Dieser Sachverhalt ist in der Anordnung in Figur 3 zu erkennen. Das neuronale Netz ist mit NN bezeichnet und das lineare Systemfehlermodell mit L. Weiterhin sind einzelne Summationsstellen S10 und S20 vorhanden und die gesamte Anordnung ist mit A10 bezeichnet. $z_t$ ist dabei eine verrauschte Messung von $y_t$. Da nur wenige Meßwerte zur Verfügung stehen, sind im einzelnen jene Fälle interessant, in denen $y_t$ mit Sicherheit gemessen werden kann, wobei also die Varianz $\delta_t=0$ ist und solche Fälle, in denen kein Meßwert vorliegt, in denen also die Varianz von $\delta_t = \infty$ ist. Vorteilhaft kann dabei $y_t^*$ als deterministischer Eingangswert für das Zustandsraummodell, das aus den Gleichungen 2-3 besteht, angesehen werden. Daraus ergibt sich, daß für eine optimale Einschritt- und Mehrschrittvorhersage des Modells lineare Kalman-Filter-Gleichungen für die Gleichungen (2) bis (3) und die Meßwertgleichung (4) verwendet werden können, bei denen $y_t^*$ als deterministischer Eingang eingesetzt wird. In ähnlicher Weise kann das lineare Fehlermodell des Systems trainiert werden, d. h. $\{\theta_i\}_{i=1}^N$ Varianz von $\varepsilon_t$, indem eine Fehlermodelladaptionsregel verwendet wird, welche mit vorwärtsrückwärts Kalman-Filter-Gleichungen implementiert wurde. Das deterministische rekurrente neuronale Netz wird dabei mit dem Restfehler adaptiert, der vom linearen Fehlermodell nicht nachgebildet werden kann, d. h.

$$target_t^{mn} = y_t^m - \hat{y}_t^{linear} ,$$

wobei $y_t^m$ den Meßwert von $y_t$ zur Zeit t darstellt und $\hat{y}_t^{linear}$ den Systemfehler angibt, der vom linearen Fehlermodell geschätzt wurde. Die Anwendung der vorwärts-rückwärts Kalman-Gleichungen wird in einem mathematischen Anhang noch erklärt.

Nachdem das neuronale Modell mit diesem Fehler adaptiert wurde, kann das lineare Fehlermodell mit dem verbleibenden Restfehler trainiert werden, der vom neuronalen Netz nicht adaptiert werden konnte. Diese Verfahrensweise kann solange durchgeführt werden, bis keine weitere Verbesserung erzielt werden kann. Der Vorteil des Verfahrens besteht dabei darin, daß alle nichtlinearen Einflüsse des Systems durch das rekurrente neuronale Netzwerk nachgebildet werden, während das lineare Fehlermodell lediglich das Rauschen des Systems nachbildet, das mit Hilfe von bekannten Lernalgorithmen für lineare Systeme antrainiert werden kann.

Vorteilhaft kann mit dem erfindungsgemäßen Verfahren und mit der erfindungsgemäßen Anordnung eine Vorhersage des Blutzuckerwertes einer Person mit Diabetes mellitus durchgeführt werden. Für solche Modelle gibt es mehrere sinnvolle Anwendungen in der Therapie: es kann benutzt werden um eines Person vor gefährlichen metabolischen Zuständen zu warnen, weiterhin kann das Modell Empfehlungen abgeben, um die Therapie des Patienten zu optimieren und schließlich kann es eingesetzt werden für die Kontrolle einer sogenannten künstlichen Betazelle, die automatisch den Blutzuckerspiegel mit Hilfe von Messungen und Insulingaben steuert. Bevorzugt wird das Systemmodell mit Daten eines Patienten trainiert, die über eine größere Zeitperiode, beispielsweise 6 Monate aufgenommen wurden. Maßgebliche Einflußgrößen für diesen Blutzucker-Insulin-Metabolismus sind im einzelnen die Zeiten und Dosierungsmengen von Insulininjektionen, die Zeiten und Mengen von Essensaufnahmen (Basalinsulin $u_t^1$ und Normalinsulin $u_t^2$), die Zeiten und Mengen von Essensaufnahme (schnelle $u_t^3$, mittlere $u_t^4$ und langsame $u_t^5$ Kohlehydrate), die Zeitpunkte und Andauer von körperlichen Übungen (regelmäßig $u_t^6$ oder intensiv $u_t^7$) und der Blutzuckerspiegel $y_t$ (mehrfach am Tag gemessen). Dabei sind $u_t^j$, für j=1,...,7 = 0 ausgenommen für den Fall, daß ein Ereignis, wie beispielsweise Essensaufnahme, Insulininjektion oder sportliche Übung stattfindet. Beispielsweise werden diese Daten für 15-minütige Anstände aufgenommen. Von diesen Daten werden beispielsweise die für 43 Tage aufgenommenen 312 Blutzuckermeßwerte zum Training des Modelles eingesetzt und die für die folgenden 21 Tage aufgenommenen 151 Blutzuckermeßwerte zu seiner Validierung. Das bedeutet, daß hierbei mit ca. 93 % fehlenden Daten beim Training umgegangen werden muß.

Dabei ist zu beachten, daß die Einflüsse von Insulin, Essensaufnahme und sportlichen Übungen auf den Blutzuckerspiegel verzögert eintreten und bevorzugt durch lineare Antwortfunktionen der Form

$$v_t^j = h_j(u_t^j)$$

modelliert werden, wobei diese den Einfluß der Eingangsgröße $u_t^j$ auf den Glukosewert beschreibt. Beispielsweise wird die Antwort $v_t^2$ von Normalinsulin $u_t^2$ nach der Injektion bestimmt, indem die Diffusion des subkutan injizierten Insulins in den Blutstrom durch drei Abteilungen erster Ordnung in Serien modelliert wird, oder wie beispielsweise durchgeführt, durch eine Antwortfunktion der Form

$$v_t^2 = h_2(u_t^2) = \Sigma_\tau g_2(t - \tau)u_\tau^2 \text{ mit } g_2(t) = a_2 t^2 e^{-b_2 t}.$$

Die funktionalen Abhängigkeiten für den Verdauungsapparat $g_j(.)$ sind dabei weniger bekannt. Es wird deshalb ebenfalls die Gleichung von obiger Form angenommen. Die Antwortfunktionen $g_j(.)$ beschreiben den Verzögerungseffekt der Eingänge auf den Blutzuckerspiegel. Dabei wird davon ausgegangen, daß die Gleichung der Form $g_j(.)$ ausreicht, um sämtliche Variationen der Verzögerungen der Eingänge abzubilden und das sie an die Physiologie des Patienten durch Variation der einzelnen Parameter $a_j$, $b_j$ angepaßt werden kann. Um die hochgradig nichtlinearen physiologischen Zusammenhänge zwischen den Antwortfunktionen $V_t^j$ und dem Blutzuckerspiegel $y_t$ nachbilden zu können, welcher lediglich wenige Male am Tag bestimmt wird, wird, wie zuvor beschrieben, die Kombination eines linearen Fehlermodells mit einem rekurrenten neuronalen Netz eingesetzt. Dabei wird bevorzugt als $f_w(.)$ ein vorwärtsgerichtetes „multi-layer perceptron" als neuronales Netz verwendet, bei dem drei versteckte lagen vorhanden sind. Als die fünf Eingänge des Netzwerkes werden dabei Insulin

$$(in_t^1 = v_t^1 + v_t^2),$$

Essen

$$(in_t^2 = v_t^3 + v_t^4 + v_t^5),$$

körperliche Ertüchtigung

$$(in_t^3 = v_t^6 + v_t^7)$$

und der gegenwärtige und vorherige Schätzwert des Blutzuckerspiegels verwendet. Die Gleichung des nichtlinearen rekurrenten Netzwerkes zweiter Ordnung ist dabei wie folgt:

$$y_t^* = y_{t-1}^* + f_w(y_{t-1}^*, y_{t-2}^*, in_t^1, in_t^2, in_t^3). \tag{5}$$

Für das lineare Fehlermodell wird ebenfalls ein Modell zweiter Ordnung verwendet

$$x_t = \theta_1 x_{t-1} + \theta_2 x_{t-2} + \varepsilon_t \tag{6}$$

Tabelle 1 zeigt dabei die Varianz der verschiedenen Vorhersagemodelle.

| Modell | % | Modell | % |
|--------|-----|---------|------|
| mean | 0 | RNN-TF | 18.8 |
| LM | 8.9 | LM-LEM | 31.4 |
| LEM | 12.9 | RNN-LEM1 | 43.7 |
| RNN-FR | 14.1 | RNN-LEM2 | 44.9 |

Zunächst wurde das rückwärtsgerichtete neuronale Netz im Freilaufmodus untersucht (RNN-FR). Dabei wurde der Blutzuckerspiegel zur Zeit t als der Ausgang des neuronalen Netzes gemäß

$$\hat{y}_t = y_t^*$$

vorhergesagt. Das neuronale Netz wurde dabei im Freilaufmodus beim Training und bei der Vorhersage betrieben. Als Lernregel wurde die Echtzeit-Lernregel für rekurrente neuronale Netze verwendet, sowohl um die Gewichte des neuronalen Netzes anzupassen, als auch die Parameter der Antwortfunktionen $g_j$ (.). Wie erkannt werden kann, erklärt dieses Modell 14.1 % der Varianz. Das rückwärtsgerichtete neuronale Netz im Teacher-Forcing-Modus (RNN-TF)ist dabei identisch zur vorherigen Untersuchung eingesetzt worden mit der Ausnahme, daß die Meßwerte für die iterierten Werte der Zeitreihe eingesetzt wurden, wann immer sie verfügbar waren. Wie aus Tabelle 1 gesehen werden kann, erklärt RNN-TF mit 18.8 % mehr der Varianz. Die Erklärung besteht darin, daß die Information der Meßwerte verwertet wird.

Die Kombination aus rekurrentem neuronalen Netzwerk und linearem Fehlermodell zweiter Ordnung der Form

$$y_t = x_t + y_t^*$$

modelliert den Blutzuckerspiegel und $z_t = y_t + \delta_t$ modelliert die Meßwertgleichung, wobei die Varianz von $\delta_t$ zu 0 gesetzt wurde für einen Meßwert des Blutzuckerspiegels zum Zeitpunkt t und die Varianz von $\delta_t$ zu unendlich gesetzt wird für fehlende Meßwerte. Für $\varepsilon_t$ werden unabhängige Gaußverteilungen des Rauschens angenommen. Zur Vorhersage wird die Gleichung im Freilaufmodus des Netzes iteriert. Der Blutzuckerspiegel zum Zeitpunkt t wird dabei durch einen linearen Kalmanfilter geschätzt, der $y_t^*$ als deterministischen Eingang in das Zustandsraummodell

$$y_t = x_t + y_t^*,$$

$z_t = y_t + \delta_t$ behandelt. Die Parameter des linearen Fehlermodells ($\theta_1$, $\theta_2$, die Varianz von $\varepsilon_t$) werden dabei durch eine Fehlermodelladaptionsregel angepaßt, die mit Hilfe von vorwarts-rückwärts Kalman-Filtergleichungen implementiert ist, die im mathematischen Erklärungsteil ausgeführt werden. Die Parameter die neuronalen Netzes werden mit derselben Lernregel angepaßt, mit der Ausnahme, daß als Target nun

$$target_t^{mnn} = y_t^m - \hat{y}_t^{linear}$$

verwendet wird, wobei $y_t^m$ einen Meßwert von $y_t$ zum Zeitpunkt t darstellt und $\hat{y}_t^{linear}$ den Schätzwert des linearen Fehlermodells basierend auf dem linearen Kalman-Filter angibt. Die Adaption des linearen Fehlermodells und des neuronalen Netzwerkes wird dabei alternierend solange durchgeführt, bis sich keine entscheidende Verbesserung mehr in der Leistungsfähigkeit des Modells ergibt.

Wie Tabelle 1 weiter zeigt, erreicht dieses Modell RNN-LEM2 die beste Leistungsfähigkeit, indem es die Varianz zu 44.9 % erklärt (das Fehlermodell erster Ordnung RNN-LEM1 kommt lediglich auf 43.7 %). Zum Vergleich mit anderen Methoden, wird ebenfalls die Leistungsfähigkeit des linearen Fehlermodells LEM, das alle Eingänge ignoriert, aufgezeigt, und des linearen Modells (LM-FR) das ohne Fehlermodell arbeitet und mit Hilfe der Echtzeitlernregel für rekurrente neuronale Netze trainiert wird. Ebenfalls dargestellt ist das lineare Modell mit dem Fehlermodell (LM-LEM). Dadurch das die nichtlinearen Modell bei weitem bessere Resultate erzielen (RNN-FR, RNN-TF, RNN-LEM), als ihr linearen Gegenstücke, wird bestätigt, daß das System sich in hohem Maße nichtlinear verhält.

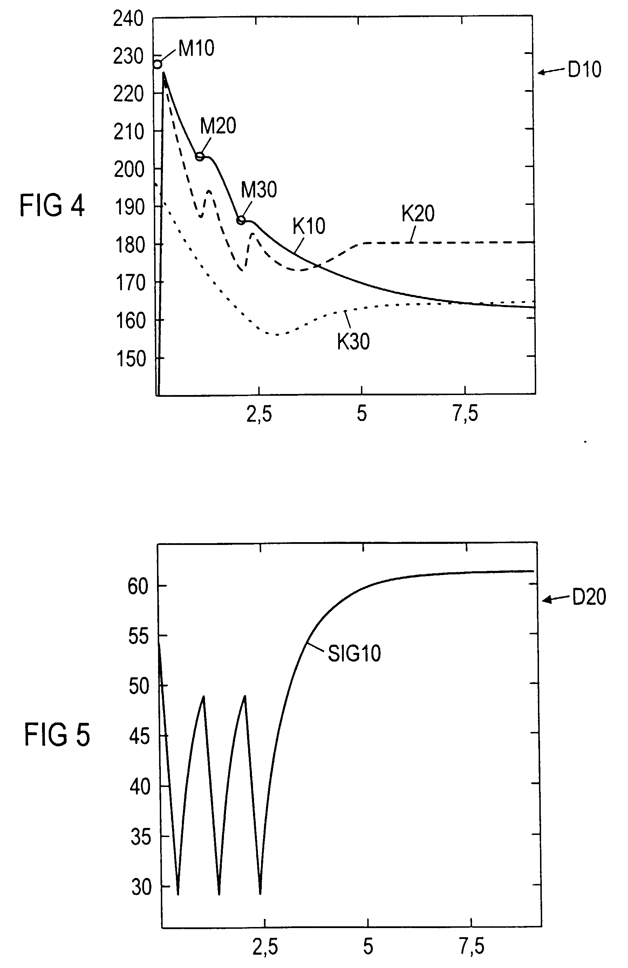

Figur 4 zeigt einige Beispiele von Ergebnissen mit den unterschiedlichen Modellen. Sie sind in einem Diagramm D10 zusammengefaßt, das zeigt, wie gut die Unterschiedlichen Modelle K10, K20 und K30 einzelne Meßwerte der Zeitreihe M10, M20 und M30 annähern können. Im Diagramm D10 ist nach oben der Blutglukosegehalt in mg/dl und nach rechts die Zeit in Stunden angegeben. Mit K30 ist der Systemverlauf angegeben, den man durch Modellierung mit dem neuronalen Netzwerk im Freilaufmodus erzielt. Mit dem rekurrenten neuronalen Netzwerk, das im "Teacher Forcing" Modus betrieben und trainiert wird, kann in bezug auf die Meßwerte ein besserer Kurvenverlauf erzielt werden, als mit der Behandlung des Meßwertes im Freilaufmodus, was Kurve K20 veranschaulicht. Der beste Kurvenverlauf ergibt sich durch die Kurve K10, also durch eine Modellierung mit einem linearen Fehlermodell und einem rekurrenten neuronalen Netzwerk in Kombination.

In Figur 5 sind in einem Diagramm D20 nach rechts die Zeit aufgetragen und nach oben die Varianz der Vorhersage in mg/dl. Dargestellt ist diese Signalkurve SIG10 für die Modellierung des Systemverhaltens mit dem linearen Fehlermodell und dem rekurrenten neuronalen Netzwerk in Kombination. Die Varianz der Vorhersage wird dabei mit dem linearen iterierten Kalman-Filter berechnet. Wie Figur 5 weiter zeigt, ist die Standardabweichung um einen Meßwert herum vergleichsweise klein und konvergiert dann gegen einen konstanten Wert. Basierend auf der Vorhersage und der geschätzten Varianz ist es also möglich eine Risikoanalyse für den Diabetiker durchzuführen, um ihn vor gefährlichen metabolischen Zuständen des Blut-Insulin-Metabolismus zu warnen.

Im folgenden werden die mathematischen Grundlagen für die Anpassung und das Training des linearen Fehlermodells dargestellt. Die Modellierung und Beobachtungsgleichungen des allgemeinen Modells ergeben sich zu:

$$x_t = \theta x_{t-1} + \varepsilon_t \qquad z_t = M_t x_t + \delta_t \qquad (7)$$

wobei $\theta$ die $K \times K$ Übertragungsmatrix des linearen Fehlermodells mit der K-ten Ordnung darstellt. Die $K \times 1$ Rauschterme $\varepsilon_t$ sind dabei unkorrelierte Normalenvektoren mit Mittelwert 0 und der allgemeinen Kovarianzmatix Q. $\delta_t$ ist ein m-dimensionaler unkorrelierter Normalenrauschvektor mit Mittelwert 0 und Kovarianzmatix $R_t$. In grundlegender Weise wird bei diesem Lösungsansatz davon ausgegangen, daß bestimmte Messungen und fehlende Meßwerte als Spezialfälle von verrauschten Messungen zu betrachten sind. Beim Ausgangszustand des Systems wird davon ausgegangen, daß dieser normalverteilt ist mit mittlerem $\mu$ und mittlerer Kovarianz $\Sigma$.

Zur Beschreibung der Gleichungen für das lineare Fehlermodel zur Maximierung der "likelihood" des Modells wird wie folgt vorgegangen: es werden die geschätzten Parameter zur (r + 1)-sten Iteration des Fehlermodells zu den Werten $\mu, \Sigma, \theta, Q$, definiert, welche die Gleichung

$$G(\mu,\Sigma,\theta,Q) = E_\tau(\log L | z_1,...,z_n) \qquad (8)$$

maximieren, wobei logL die log-likelihood Funktion der kompletten Daten $x_0, x_1,..., x_n, z_1,..., z_n$ angibt und $E_r$ die wahrscheinliche Erwartung relativ zu einer Dichte angibt, welche die Werte der r-ten Iteration $\mu(r), \Sigma(r), \theta(r)$ und $Q(r)$ angibt. Die fehlenden Zielgrößen werden dabei implizit durch die Definition von $M_t$ und $R_t$ modelliert.

Um die durch Gleichung 8 angegebene bedingte Erwartung zu berechnen, wird der folgende Satz von Rekursionsformeln, der die Standard Kalman-Filter-Ergebnisse auswertet, benutzt [1]. Zunächst wird dabei die Vorwärtsrekursion angegeben:

$$x_t^{t-1} = \theta x_t^{t-1} \qquad (9)$$

$$P_t^{t-1} = \theta P_t^{t-1} \theta^T + Q$$

$$K_t = P_t^{t-1} M_t^T (M_t P_t^{t-1} M_t^T + R_t)^{-1}$$

$$x_t^t = x_t^{t-1} + K_t(y_t^* - M_t x_t^{t-1})$$

$$P_t^t = P_t^{t-1} - K_t M_t P_t^{t-1}$$

wobei

$$x_0^0 = \mu$$

und

$$P_0^0 = \Sigma$$

gilt. Als nächstes wird die Rückwärtsrekursionsformel angegeben:

$$J_{t-1} = P_{t-1}^{t-1} \theta^T (P_{t-1}^{t-1})^{-1} \tag{10}$$

$$x_{t-1}^n = x_{t-1}^{t-1} + J_{t-1}(x_t^n - \theta x_{t-1}^{t-1})$$

$$P_{t-1}^n = P_{t-1}^{t-1} + J_{t-1}(P_t^n - P_t^{t-1})J_{t-1}^T$$

$$P_{t-1,t-2}^n = P_{t-1}^{t-1}J_{t-2}^T + J_{t-1}(P_{t,t-1}^n - \theta P_{t-1}^{t-1})J_{t-2}^T$$

mit der Initialisierung

$$P_{n,n-1}^n = (I - K_n M_n)\theta P_{n-1}^{n-1}.$$

Dabei bildet eine Vorwärts- und eine Rückwärtsrekursion den Fehlerschritt des Fehlermodellierungs-Algorithmus. Um daraus den Modellierungsschritt zu erhalten, werden die bedingten Wahrscheinlichkeiten in Gleichung 8 zu folgenden Gleichungen umgebildet:

$$G = -\frac{1}{2}\log|\Sigma| - \frac{1}{2}\text{tr}\{\Sigma^{-1}(P_0^n + (x_0^n - \mu)(x_0^n - \mu)^T)\} \tag{11}$$

$$-\frac{n}{2}\log|Q| - \frac{1}{2}\text{tr}\{Q^{-1}(C - B\theta^T - \theta B^T - \theta A\theta^T)\}$$

$$-\frac{n}{2}\log|R_t| - \frac{1}{2}\text{tr}\{R_t^{-1}\Sigma_{t=1}^n[(y_t^* - M_t x_t)(y_t^* - M_t x_t)^T + M_t P_t^n M_t^T]\}$$

wobei tr{.} die Spur angibt, und

$$A = \Sigma_{t=1}^n (P_{t-1}^n + x_{t-1}^n x_{t-1}^{nT}),$$

$$B = \Sigma_{t=1}^n (P_{t,t-1}^n + x_{t-1}^{nT}) \text{ und } C = \Sigma_{t=1}^n (P_t^n + x_t^n x_t^{nT})$$

gelten. $\theta(r + 1) = BA^{-1}$ und $Q(r + 1) = n^{-1}(C - BA^{-1}B^T)$ maximieren dabei die logarithmische Wahrscheinlichkeitsgleichung 11. $\mu(r+1)$ wird zu $n_0^n$ gesetzt und $\Sigma$ kann auf einen vernünftigen Grundwertpegel gesetzt werden. Die Ableitung dieser Gleichungen ergibt sich aus [3]. Die E- (vorwärts und rückwärts Kalman-Filter-Gleichungen) und die M-Schritte werden alternierend wiederholt bis sie gegen eine Fehlermodellösung konvertieren.

Literatur

[1] Jazwinski, A. H. (1970) Stochastic Processes and Filtering Theory, Academic Press, N.Y.
[2] Lewis, F. L. (1986) Optimal Estimation, John Wiley, N.Y.
[3] Shumway, R. H. and Stoffer, D. S. (1981) Time Series Smoothing and Forecasting Using the EM Algorithm, Technical Report No. 27, Division of Statistics, UC Davis.
[4] Tresp, V., Moody, J. and Delong, W.-R. (1994) Neural Modeling of Physiological Processes, in comput. Learning Theory and Natural Learning Sys. 2, Hanson et al., eds., MIT Press.

**Patentansprüche**

1. Verfahren zur neuronalen Modellierung eines dynamischen Systems mit nichtlinarem stochastischem Verhalten. mit folgenden Merkmalen:

   a) das Systemverhalten wird in Form von einer Zeitreihe (Z10) von mindestens einer Einflußgröße des Systems für eine Vorhersage modelliert;
   b) die Einflußgröße wird als additive Kombination aus einer deterministischen Ausgangsgröße (y*) eines rekurrenten neuronalen Netzes (NN) und einem linear modellierten Systemfehler ($\varepsilon$) gebildet;
   c) das rekurrente neuronale Netz wird an einem ersten Zeitpunkt mit dem Fehlermodelladaptionsfehler adaptiert, der als Differenz zwischen der am ersten Zeitpunkt gemessenen Einflußgröße (M70) des Systems und dem Systemfehler gebildet wird.

2. Verfahren zur neuronalen Modellierung eines dynamischen Systems mit nichtlinarem stochastischem Verhalten. mit folgenden Merkmalen:

   a) das Systemverhalten wird in Form von einer Zeitreihe (Z10) von mindestens einer Einflußgröße des Systems für eine Vorhersage modelliert;
   b) die modellierte Einflußgröße wird als additive Kombination aus einer deterministischen Ausgangsgröße (y*) eines rekurrenten neuronalen Netzes und einem linear modellierten Systemfehler ($\varepsilon$) gebildet;
   c) das Modell (L) für die Modellierung des Systemfehlers ($\varepsilon$) wird mit dem als Differenz aus der dem Netz an einem ersten Zeitpunkt als Eingangsgröße zugeführten Einflußgröße und der Ausgangsgröße, welche das adaptierte Netz ausgibt, gebildeten Neuronenmodelladaptionsfehler, adaptiert.

3. Verfahren nach Anspruch 1 und 2

4. Verfahren nach einem der vorangehenden Ansprüche,

   a) bei dem der Systemfehler ($\varepsilon$) mit einem Kalmanfilter modelliert wird,
   b) bei dem ein Fehlender Meßwert (V60) in der Zeitreihe mit Varianz unendlich modelliert wird;
   c) und bei dem ein Meßwert in der Zeitreihe mit Varianz Null modelliert wird.

5. Verfahren nach Anspruch 3 oder 4 mit folgenden Systemgleichungen,

$$y_t^* = f_w(y_{t-1}^*, \ldots, y_{t-N}^*, u_t) \qquad (1)$$

$$x_t = \sum_{i=1}^{K} \theta_i x_{t-i} + \varepsilon_t \qquad (2)$$

$$y_t = y_t^* + x_t = f_w(y_{t-1}^*, \ldots, y_{t-N}^*, u_t) + \sum_{i=1}^{K} \theta_i x_{t-i} + \varepsilon_t, \qquad (3)$$

und der Meßwertgleichung

$$z_t = y_t + \delta_t \qquad (4)$$

mit:

$\varepsilon_t$ und $\delta_t$:   additives Rauschen. Hierbei wird die
$y_t^*$:   Antwort
$y_t$:   Einflußgröße
$x_t$:   Systemfehler

**6.** Verfahren nach einem der vorangehenden Ansprüche, bei dem das rekurrente neuronale Netz (NN) mit der Echtzeit Lernregel für neuronale Netze trainiert wird.

**7.** Verfahren nach einem der vorangehenden Ansprüche, bei dem das lineare Fehlermodell (L) mit vorwärts/rückwärts Kalman-Filtergleichungen adaptiert wird.

**8.** Verfahren nach einem der vorangehenden Ansprüche,

a) bei dem als dynamisches System der Glucose/Insulin-Metabolismus eines Diabetes Patienten modelliert wird,
b) und bei dem als Einflußgröße mindestens der Glucosespiegel des Blutes modelliert wird.

**9.** Verfahren nach Anspruch 8 bei dem dem rekurrenten neuronalen Netz (NN) zum Training mindestens Zeitreihen (Z10) von folgenden Einflußgrößen des Patienten zugeführt werden: verabreichte Insulindosen, Essensmenge, Sport, aktueller Blut-Gluosespiegel, vorangegangener geschätzter Blut-Gluosespiegel.

**10.** Anordnung zur neuronalen Modellierung eines dynamischen Systems mit nichtlinarem stochastischem Verhalten. mit folgenden Merkmalen:

a) sie weist ein rekurrentes neuronales Netz (NN) zur Prognose von mindestens einer Einflußgröße des Systems auf;
b) sie weist Mittel zur Fehlermodellierung (L) eines Systemfehlers ($\varepsilon$) des dynamischen Systems auf;
c) sie weist Mittel zur Bildung eines Adaptionsfehlers für einen ersten Zeitpunkt als der Differenz aus dem Systemfehler des dynamischen Systems und der am ersten Zeitpunkt gemessenen Einflußgröße des Systems auf;
d) sie weist wenigstens beim Training des Neuronalen Netzes mit dem Systemverhalten Mittel zur Adaption des rekurrenten neuronalen Netzes mit dem Adaptionsfehler auf.

**11.** Anordnung zur neuronalen Modellierung eines dynamischen Systems nach Anspruch 10,

a) bei der das neuronale Netz (NN) als Multilayer Perceptron ausgeführt ist,
b) und bei der das neuronale Netz (NN) einen hidden Layer mit drei Neuronen aufweist.

**12.** Anordnung zur neuronalen Modellierung eines dynamischen Systems nach einem der Ansprüche 10 oder 11, bei der das neuronale Netz (NN) Mittel zur Eingabe eines Blutzuckermeßwertes aufweist.

FIG 1

FIG 2

FIG 3

FIG 4

FIG 5